# EUROPEAN PATENT APPLICATION

(11) **EP 0 722 772 A1**
(43) Date of publication of application: **24.07.1996**
(21) Application number: 96100240.9
(22) Date of filing: 10.01.1996
(51) Int. Cl.: B01J 20/04, G01N 30/48

(54) **Column packing material comprising OH-carbonated hydroxyapatite**

(30) Priority: 18.01.1995 JP 5760/95
(71) Applicant: MITSUBISHI MATERIALS CORPORATION, Chiyoda-ku, Tokyo (JP)
(72) Inventor: Watanabe, Etsuko, c/o Sohgou-kenkyusho, Omiya-shi, Saitama-ken (JP)
(74) Representative: Türk, Gille, Hrabal, Leifert

(57) **Abstract**

Disclosed is a column packing material comprising, as the active ingredient, an OH-carbonated hydroxyapatite which is obtained by partly substituting the OH groups in hydroxyapatite with CO₃ groups and of which the CO₃ content is at least 0.2 % by weight. Using this, possible is selective adsorption and separation of any of acidic, basic and neutral biochemical substances by column chromatography.

## Description

### FIELD OF THE INVENTION

The present invention relates to a column packing material comprising, as the active ingredient, an OH-carbonated hydroxyapatite to be obtained by partly substituting the OH groups in hydroxyapatite with CO₃ groups.

### BACKGROUND OF THE INVENTION

Hydroxyapatite is one of calcium phosphates, which is generally represented by a chemical formula of Ca₁₀(PO₄)₆(OH)₂. Recently, this is widely used as a column packing material for liquid chromatography for separating biopolymers such as proteins, nucleic acids, etc.

For example, commercial products of a packing material to be obtained by granulating the primary crystals of hydroxyapatite that have been produced in wet or hydrothermally, into spherical particles by-spray-drying or the like (see Japanese Patent Laid-Open No. 1-230413) are known.

However, the particles of such a conventional hydroxyapatite packing material for columns in chromatography are not uniform and have a large mean particle size. In addition, since these are tabular, these are problematic in the reliability for the measurement therewith in that their separability varies depending on the method of filling them in a column and on the method of operating the chromatographic measurement using the column filled with them. The conventional hydroxyapatite column packing material for chromatography can be satisfactorily utilized for adsorption and separation of basic biochemical substances having an isoelectric point (pI) of higher than 7.0 but has a problem in that its ability to adsorb and separate acidic biochemical substances having an isoelectric point of lower than 7.0 is not satisfactory.

### SUMMARY OF THE INVENTION

Accordingly, the object of the present invention is to provide a column packing material having a ability to more highly adsorb and separate any of basic and acidic biochemical substances.

According to the present invention, there is provided a column packing material comprising, as the active ingredient, an OH-carbonated hydroxyapatite which is obtained by partly substituting the OH groups in hydroxyapatite with CO₃ groups and of which the CO₃ content is at least 0.2 % by weight.

### BRIEF DESCRIPTION OF THE DRAWINGS

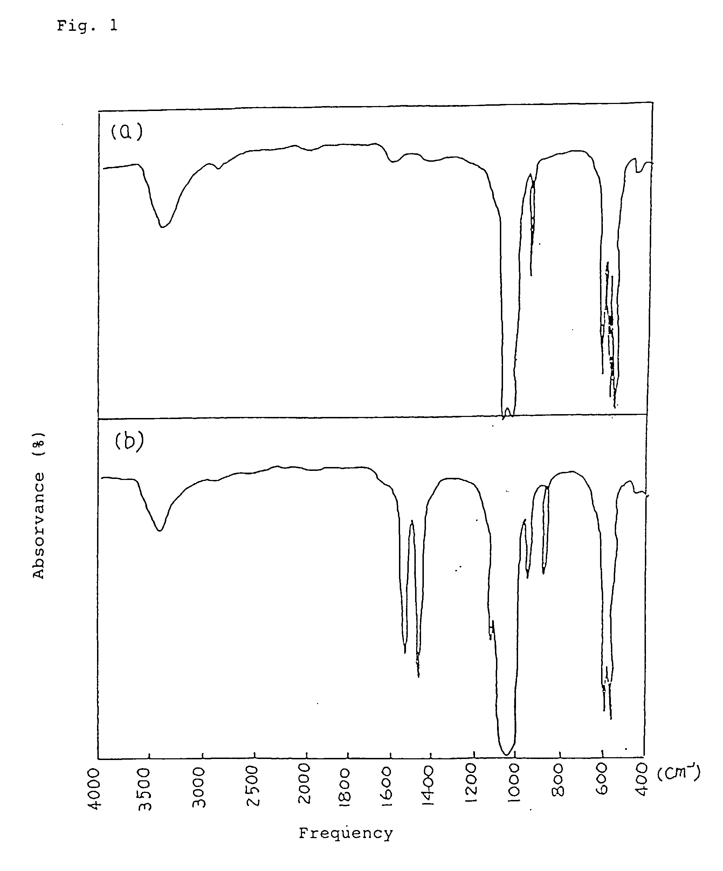

Fig. 1(a) shows a chart of the infrared absorption spectrum of hydroxyapatite. Fig. 1(b) shows a chart of the infrared absorption spectrum of the OH-carbonated hydroxyapatite as produced in Example 1.

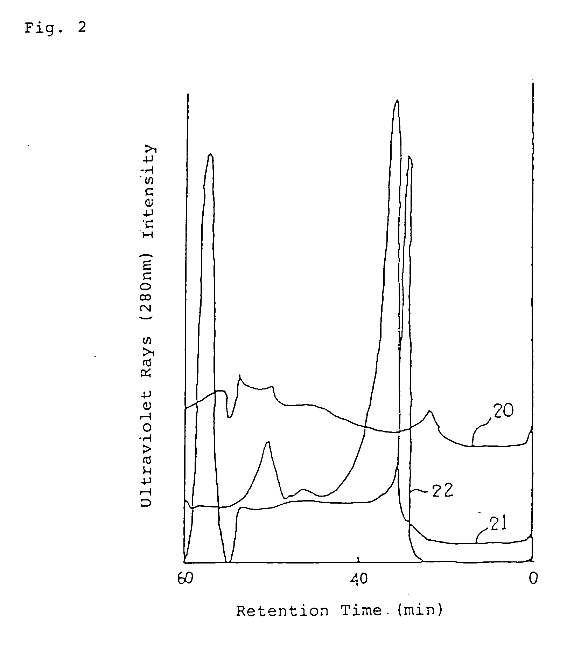

Fig. 2 shows chromatograms of BSA as developed through a column filled with the OH-carbonated hydroxyapatite having a CO₃ content of 2.61 % by weight as produced in Example 1, through a column filled with the OH-carbonated hydroxyapatite having a CO₃ content of 4.90 % by weight as produced in Example 1, and through a column filled with the hydroxyapatite as produced in Comparative Example 1. In this, 20 is a chromatogram of BSA as developed through a column filled with the hydroxyapatite produced in Comparative Example 1; 21 is a chromatogram of BSA as developed through a column filled with the OH-carbonated hydroxyapatite with a CO₃ content of 2.61 % by weight produced in Example 1; and 22 is a chromatogram of BSA as developed through a column filled with the OH-carbonated hydroxyapatite with a CO₃ content of 4.90 % by weight produced in Example 1.

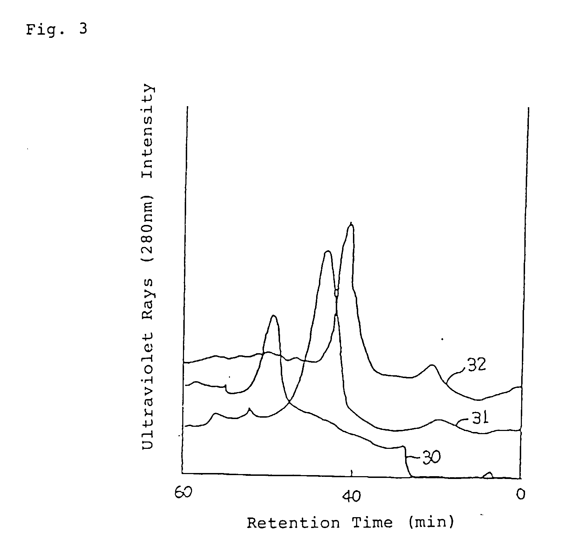

Fig. 3 shows chromatograms of cytochrome C as developed through a column filled with the OH-carbonated hydroxyapatite having a CO₃ content of 2.61 % by weight as produced in Example 1, through a column filled with the OH-carbonated hydroxyapatite having a CO₃ content of 4.90 % by weight as produced in Example 1, and through a column filled with the hydroxyapatite as produced in Comparative Example 1. In this, 30 is a chromatogram of cytochrome C as developed through a column filled with the hydroxyapatite produced in Comparative Example 1; 31 is a chromatogram of cytochrome C as developed through a column filled with the OH-carbonated hydroxyapatite with a CO₃ content of 2.61 % by weight produced in Example 1; and 32 is a chromatogram of cytochrome C as developed through a column filled with the OH-carbonated hydroxyapatite with a CO₃ content of 4.90 % by weight produced in Example 1.

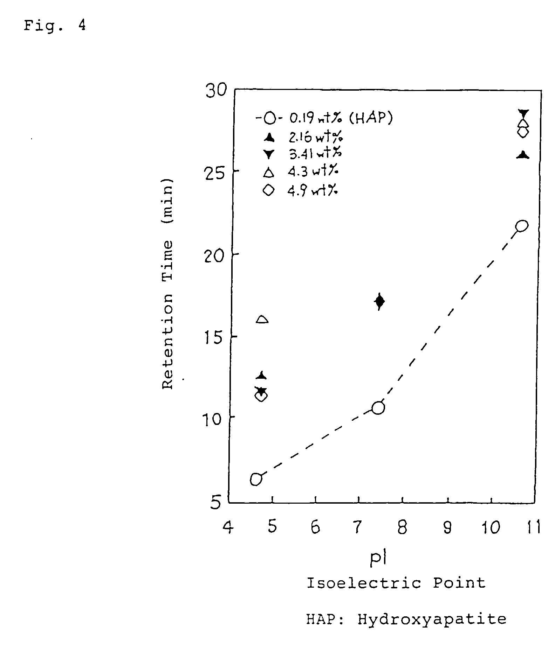

Fig. 4 is a graph as drawn by plotting the retention times derived from the chromatograms of BSA, hemoglobin and cytochrome C each developed through a column filled with the OH-carbonated hydroxyapatite produced in Example 1 or the hydroxyapatite produced in Comparative Example 1.

### DETAILED DESCRIPTION OF THE INVENTION

The present invention is described in more detail hereinunder.

The active ingredient in the column packing material of the present invention is an OH-carbonated hydroxyapatite, which is obtained by partly substituting the OH groups in hydroxyapatite with CO₃ groups and is represented by (Ca₁₀(PO₄)₆(CO₃)ₓ(OH)₂₋₂ₓ). The CO₃ content of the OH-carbonated hydroxyapatite is at least 0.2 % by weight (with the degree of substitution with CO₃ groups for OH groups of being at least 3.4 %), preferably from 2.0 to 5.0 % by weight. If the CO₃ content is lower than 0.2 % by weight, the ability of the column packing material to adsorb and separate acidic biochemical polymers is lowered.

Since the OH-carbonated hydroxyapatite in the column packing material of the present invention contains CO₃ groups as substituted for OH groups without lowering its PO₄ content that participates in a ability to adsorb proteins, the ability to adsorb proteins is higher than that of hydroxyapatite in conventional column packing materials. In addition, since the OH-carbonated hydroxyapatite is such that a part of the OH groups in the hydroxyapatite have been substituted with CO₃ groups, many porous structures exist on its surface. Therefore, the functional groups of proteins can easily penetrate into the three-dimensional structures of the OH-carbonated hydroxyapatite and, in addition, the force of the OH-carbonated hydroxyapatite to bind proteins therewith is enhanced. For these reasons, the OH-carbonated hydroxyapatite exhibits enlarged adsorbability.

Regarding its shape, it is desirable that the OH-carbonated hydroxyapatite is granular or powdery so that it can easily be filled in columns., and it is desirable that its mean particle size falls between 3 µm and 20 µm. If its mean particle size is less than 3 µm and if a packing material comprising the OH-carbonated hydroxyapatite having such a small mean particle size is filled in a column through which a fluid is passed, the pressure loss in the column is too large. If, however, its mean particle size is more than 20 µm, the surface area per unit volume of the OH-carbonated hydroxyapatite is too small with the result that the separability thereof will be unfavorably lowered.

To prepare the above-mentioned OH-carbonated hydroxyapatite for use in the present invention, employable are known methods, for example, including a method of heating hydroxyapatite in carbon dioxide at a normal pressure at about 1000°C. To make it granular or powdery, it may be granulated or powdered by any of known spray-drying granulation, grinding granulation, rotary granulation, etc.

To actually use the column packing material of the present invention, for example, employable is a method of filling the column packing material in a column followed by introducing thereinto an acidic, basic or neutral, protein-containing fluid of various biopolymers, such as BSA, cytochrome C, hemoglobin, etc., and passing the fluid through the column, by which the intended biopolymers are made selectively adsorbed by the packing material in the column.

Of the biopolymers as adsorbed by the packing material, only the substance to be eluted can be selectively eluted by varying the kind and the concentration of the buffer that shall be passed through the column. For example, such selective elution can be conducted by linear gradient liquid chromatography. As the buffer, for example, employable is any of phosphate buffers such as KH₃PO₄ buffer.

As has been described in detail hereinabove, since the column packing material of the present invention comprises, as the active ingredient, an OH-carbonated hydroxyapatite having a CO₃ content of at least 0.2 % by weight, its ability to adsorb and separate any of acidic and basic biochemical substances is high. In addition, the column packing material of the present invention can be used for selectively adsorbing and separating even acidic biochemical substances that could not be satisfactorily adsorbed and separated by any conventional column packing material comprising hydroxyapatite.

The present invention is described in more detail by means of the following examples and comparative examples, which, however, are not intended to restrict the scope of the present invention.

### Example 1:

7.37 g of calcium hydroxide was reacted with 6.89 g of 85 wt.% phosphoric acid in wet, at a molar ratio of Ca/P of 1.67 to obtain hydroxyapatite. 500 ml of the 2 wt.% hydroxyapatite slurry thus obtained was spray-dried for granulation. The thus-granulated particles of hydroxyapatite were introduced into a furnace having a carbon dioxide atmosphere at 2 kg/cm² at 650°C, 700°C, 800°C or 900°C and kept therein for 24 hours. Thus, four kinds of OH-carbonated hydroxyapatite powder were obtained. The infrared absorption spectrum of the thus-obtained OH-carbonated hydroxyapatite powder is shown in Fig. 1(b), and that of the hydroxyapatite in Fig. 1(a).

In Fig. 1(b), carbonic acid absorption peaks appear near 1534 cm⁻¹, 1465 cm⁻¹ and 884 cm⁻¹, while water absorption zones near 3570 cm⁻¹ and 637 cm⁻¹ are smaller than those of hydroxyapatite in Fig. 1(a). As a result of the comparison between the data of the powder obtained herein with those of OH-carbonated hydroxyapatite in literature by Montel et al. (1964), the former was verified to comprise OH-carbonated hydroxyapatite. Next, the CO₃ content of each powder produced herein was calculated from the data obtained by X-ray diffractometry. Thus, the products obtained herein were found to be OH-carbonated hydroxyapatite with a CO₃ content of 2.61 % by weight, OH-carbonated hydroxyapatite with a CO₃ content of 3.41 % by weight, OH-carbonated hydroxyapatite with a CO₃ content of 4.30 % by weight, and OH-carbonated hydroxyapatite with a CO₃ content of 4.90 % by weight.

Next, the thus-obtained OH-carbonated hydroxyapatite powders were separately put into different columns of 150 mm x 40 mmφ for high performance liquid chromatography (HPLC) by a wet-filling method (slurry method). Thus, four OH-carbonated hydroxyapatite-filled columns were prepared.

A sample solution comprising BSA (bovine serum albumin), hemoglobin or cytochrome C, which is a typical acidic, neutral or basic protein, was introduced into each column, and the adsorbing and separating ability of each column was evaluated. The chromatograms as obtained by developing BSA through the column filled with the OH-carbonated hydroxyapatite with a CO₃ content of 2.61 % by weight and through the column filled with the OH-carbonated hydroxyapatite with a CO₃ content of 4.90 % by weight are shown in Fig. 2. The chromatograms as obtained by developing cytochrome C through the column filled with the OH-carbonated hydroxyapatite with a CO₃ content of 2.61 % by weight and through the column filled with the OH-carbonated hydroxyapatite with a CO₃ content of 4.90 % by weight are shown in Fig. 3. Fig. 4 shows a graph as drawn by plotting the retention times derived from the chromatograms of BSA, hemoglobin and cytochrome C each developed through a column filled with the OH-carbonated hydroxyapatite produced herein.

### Comparative Example 1:

The same process as in Example 1 was repeated, except that a hydroxyapatite powder as obtained by calcining the hydroxyapatite particles produced in Example 1 in a furnace having an air atmosphere at 900°C was used in place of the Oh-carbonated hydroxyapatite powder. The results thus obtained herein are shown in Fig. 2 to Fig. 4 along with those obtained in Example 1.

While the invention has been described in detail and with reference to specific embodiments thereof, it will be apparent to one skilled in the art that various changes and modifications can be made therein without departing from the spirit and scope thereof.

## Claims

1. A column packing material comprising, as the active ingredient, an OH-carbonated hydroxyapatite which is obtained by partly substituting the OH groups in hydroxyapatite with CO₃ groups and of which the CO₃ content is at least 0.2 % by weight.

2. The column packing material as claimed in claim 1, which is used for adsorbing and separating an acidic, basic or neutral biochemical substance by column chromatography.
